# EUROPEAN PATENT SPECIFICATION

(11) **EP 1 892 286 B1**
(45) Date of publication and mention of the grant of the patent: **09.11.2011**
(21) Application number: 07014766.5
(22) Date of filing: 27.07.2007
(51) Int. Cl.: C12G 1/00, C12G 1/02

(54) **Method for the production of wine and wine obtained from such method**
Verfahren zur Herstellung von Wein und anhand dieses Verfahrens gewonnener Wein
Procédé pour la production de vin et vin correspondant

(30) Priority: 27.07.2006 EP 06015659
(43) Date of publication of application: 27.02.2008
(73) Proprietor: Bioseutica B.V., 3899 BD Zeewolde (NL)
(72) Inventor: Villa, Adalberto, 6906 Lugano (CH); Bellachioma, Attillo, 37057 San Giovanni Lupatoto (VR) (IT); Riponi, Claudio, 40126 Bologna (IT); Bruzzese, Tiberio, 20146 Milano (IT)
(74) Representative: Zardi, Marco

(56) References cited:
- WO-A-99/07821
- WO-A-2007/001920
- CN-A- 1 233 650
- RU-C1- 2 271 388
- DATABASE EMBASE [Online] ELSEVIER SCIENCE PUBLISHERS, AMSTERDAM, NL; 1998, CRAPISI A ET AL: "Alternative techniques to reduce the use of sulphur dioxide in winemaking" XP001248589 Database accession no. EMB-1998407371 & ALCOLOGIA 1998 ITALY, vol. 10, no. 1-2, 1998, pages 66-68, ISSN: 0394-9826
- PICKERING G: "THE USE OF ENZYMES TO STABILISE COLOUR AND FLAVOUR IN WINE - AN ALTERNATIVE TO SO2?" AUSTRALIAN GRAPEGROWER AND WINEMAKER, RYAN PUBLICATIONS, ADELAIDE, AU, vol. 417, September 1998 (1998-09), pages 101-102, XP009076719 ISSN: 0727-3606

## Description

### Field of application

The present invention refers to a method for the production of wine and a wine obtained from such new method

### Prior art

The traditional wine production method comprises the subsequent steps of the grape harvest, grape crushing, alcoholic fermentation of the must by yeasts, wine ageing, stabilization, filtering and bottling of the wine.

As it is well-known, in the course of the fermentation, yeasts (usually *Saccharomyces cerevisiae*)*,* operate the conversion of the sugars to ethyl alcohol and carbon dioxide by way of the following reaction:

C₆H₁₂O₆ → 2 C₂H₅OH + 2 CO₂

However, it is also well-known that reactions or fermentation processes parallel and/or subsequent to the alcoholic fermentation also take place, which are started by contaminating bacteria and yeasts, in particular malolactic fermentation, in which the lactic acid bacteria transform malic acid in lactic acid, thereby causing an increase in the pH of the must or of the wine.

It is known and widespread in the sector to resort to must sulfiting, that is, the addition of sulfur dioxide (SO₂) to ensure the microbiological and chemical stability of the final product.

This procedure, used in the great majority of the cases, is particularly widespread because sulfur dioxide exercises a double action: antioxidant and antibacterial. It therefore not only helps preserve over time the organoleptic characteristics (color, body, flavor) and, in particular, the scent of the wine, but also blocks the secondary reactions started by the yeasts and the lactic acid bacteria. Finally, it plays a role in the microbiological preservation of the wine itself.

Sulfur dioxide, which produces sulfites when in solution, is an additive permitted by law within certain limits (the World Health Organization (WHO) has established that the allowable daily intake (ADI) is 0.7 mg/Kg of body weight) and its use has come to be seen as essential in the winemaking technology.

However, even when added within the limits permitted by law, sulfur dioxide can be harmful to health because of its intrinsic toxicity and can lead to intolerance, thus causing problems in sensitive individuals.

Moreover, sulfur dioxide can interfere with the metabolism of the fermenting yeasts and interact with grape polyphenols thereby decoloring or destabilizing the color of red wines. From an organoleptic point of view, both in white and in red wines, sulfur dioxide concentrations even lower than the upper legal limits, can give rise to unpleasant odors and metallic tastes which mask the natural scent of the wines.

In the endeavor to overcome such drawbacks, many attempts have recently been made towards limiting the use of sulfur dioxide by the use of alternative and healthier additives upon which are devolved, to a substantial extent, the anti-bacterial and antioxidant activities.

WO 2007/001920 relates to a method of decreasing the interaction between tannins and lysozyme in wine. Such method includes the step of introducing a tannin binding agent.

This has involved mostly the production of the so-called "organic" wines, which can claim, and which distinguish themselves for, their cultivation and production methods, which are as natural as possible and in line with tradition and in the respect of the environment and of consumer health.

However, such attempts have been generally unsuccessful, as the organoleptic properties of the wine thus obtained are considerably different from those of wine obtained by way of well-known and traditional methods that use said sulfiting step. In particular, the wine obtained from alternative production methods known in the sector is oxidized, altered in its color, of unusual flavor and/or microbiologically contaminated

The technical problem underlying the present invention is thus that of providing a method for the production of a wine having microbiological and organoleptic properties that are comparable to those of a wine obtained by a traditional method involving the addition of sulfur dioxide, so as to overcome the drawbacks mentioned above with reference to the prior art.

### Summary of the invention

Such a technical problem is solved by a method for the production of wine comprising the steps of:
a) Preparing a grape must;
b) Subjecting the grape must to clarification; and
c) Subjecting the clarified grape must to alcoholic fermentation to obtain said wine;
characterized in that it comprises the step of adding to the clarified grape must prior to the alcoholic fermentation thereof, in sequence 1) at least one tannin and 2) lysozyme.

Hereunder, by the expression "grape must" is meant the product obtained from grapes pressed by crushing, draining, pressing, vertical pressing, or other method for the extraction of juice.

The grape must clarification step involves the common operations for the neutralization of the oxidizing components and the contaminating microbial load found in the grape must. Such operations include the addition to the grape must of clarifying agents such as bentonite, potassium caseinate, silica sol, gelatin, albumin, polyvinylpyrrolidone (PVPP), pectolytic enzymes and the removal of solid products obtained upon such addition by decanting, centrifugation or filtration.

Tannins are organic compounds of plant origin and they are obtained, usually, from plants such as oak, fir tree, chestnut tree, etc. The most important property of tannins in their use in winemaking, is their antioxidant activity, that is, their ability to donate electrons to free radicals thereby blocking the destructive chain reaction started by these latter.

Lysozyme (or muramidase) is an enzyme attacking the particular structure of the cell wall of Gram-positive bacteria, such as, for example, the bacteria of the genus *Clostridium, Listeria, Streptococcus* and the great majority of the lactic acid bacteria which are involved in the malolactic fermentation. The lysozyme hydrolyzes the β(1,4) glycosidic bond between N-acetylmuramic acid and the N-acetylglucosamine, which make up the cell wall of these bacteria.

In the present invention, by the term "lysozyme" what is meant is a lysozyme of animal or plant origin, for example an isolate or extract obtained from any suitable raw material of animal or plant origin (e.g. tissues, animal secretions, egg white, etc.), natural or genetically modified.

The present invention is based on the surprising fact that by sequentially adding tannins and lysozyme to the clarified grape must, prior to the fermentation, the complementary activities offered by the tannins and the lysozyme can be fully exploited to the extent that it is possible to obtain a wine having optimal organoleptic properties and a high chemical and microbiological stability without having to resort to additions of sulfur dioxide in the course of the preparation method. On the one hand, in fact, the tannins generate an antioxidant effect, inhibiting the formation of oxidizing reactions that are damaging to the aroma and the color of the final wine, whereas on the other hand, the lysozyme has an anti-microbial effect, which hinders the formation of secondary reactions and helps preserve the wine over time.

It follows that the method according to the present invention does not require a sulfiting step and the wine obtained according to the method will contain no added sulfites.

More in particular, it has been surprisingly found that by adding tannins and lysozyme to the clarified grape must sequentially, prior to fermentation, there is a large reduction or complete inhibition of events that would decrease the activity of the above-mentioned compounds, such as for example flocculation originating from the interaction of the tannins with lysozyme in the same solution.

In this respect it should be noted that by first adding the tannins to the clarified grape must, they will interact with oxidizing components of the grape must, thereby blocking the oxidation reactions that can adversely affect the desirable aroma and color of the final wine, thus becoming substantially unavailable for interaction with the subsequently added lysozyme. Said lysozyme will thus be able to carry out its activity in the clarified grape must thereby conferring an adequate microbiological control to the must as well as to the final wine.

It should be noted, moreover, that by adding the lysozyme to the grape must after its clarification, any complexing events of the former with solid components of the grape must, which could lead to a decrease in the activity of the lysozyme, are advantageously avoided.

According to a preferred embodiment of the method of the invention, the at least one tannin is added in a quantity comprised between 5 and 100 g/hl based on the volume of the final wine. According to a further embodiment, the at least one tannin is added in the form of an aqueous solution containing between about 3 and 50% by weight of tannin in a quantity comprised between 10 and 200 ml/hl based on the final volume, preferably between 10 and 30 ml/hl based on the final volume of the wine obtained from the method of the invention.

In the present invention, the tannins used for the preparation of the aqueous solution to be added to the grape must are preferably chosen from the plant species of tara vine, myrobalan, quercus infectoria, quebracho, sessile oak, chestnut tree and others. The tannins extracted from the above-mentioned plants, or parts of them, have in fact been shown to be particularly suitable for the purposes of the present invention as they exhibit a high specificity of action as well as an effect complementary to the use of the lysozyme of the present invention.

It has been shown, in fact, that the chosen tannins are strong oxygen acceptors and they therefore bind the dissolved oxygen in the wine thus inhibiting the oxidation of the grape polyphenols. Moreover, they can denature the oxidase enzyme proteins deriving from the grapes or from any grape parasitic microorganism. A further protective action against oxidation is given by the ability of these tannins to complex molecules of iron, copper and other metals that act as catalysts in the oxidative process.

The tannin aqueous solution is preferably prepared *in situ* or bought in ready for use. The quantity of tannin added to the grape must will mainly depend on the quantity of polyphenols present, the hygienic state of the grapes, the quantity of dissolved oxygen in the must, the degree of turbidity, and the concentration of metals such as iron, zinc, copper and others. Such factors that are critical for the addition of the tannins can be pre-determined by way of a suitable analysis of the grape must to be fermented, in a conventional manner.

In the method according to the invention, the lysozyme is added in a quantity comprised between 5 and 50 g/hl based on the final volume, preferably between 15 and 35 g/hl based on the final volume, even more preferably between 20 and 30 g/hl based on the final volume of the wine obtained from the method.

Preferably, in the method according to the invention, the lysozyme is in the form of a 95% pure extract from hen's egg albumen.

The lysozyme from albumen is obtained by extraction of the hen's egg white. Such extraction, itself conventional, is done by passing the albumen over ionic exchange resins followed by elution based on the fact that the lysozyme has a pI of 10.5 whereas other albumen proteins have an isoelectric point (pI) of about 5.

The eluted product undergoes a purification cycle which does not involve the use of organic solvents but rather only aqueous ones and is finally dried. The product obtained is compliant with the purity requirements established by the competent authorities for this product.

Preferably, the lysozyme is added to the grape must in the form of an aqueous solution. In this respect, prior to the addition of the grape must, it is preferably re-hydrated with water and mixed with a portion of grape must until substantially homogenized. As a non limiting example, the lysozyme can be re-hydrated in ten times its quantity in weight of water and subsequently mixed with a portion of the must until the volume is at least trebled.

In order for the lysozyme to carry out its bactericidal action, in fact, it is recommended that it be well homogenized with the grape must to be treated.

The quantity of lysozyme added to the clarified grape must will depend on factors of the must such as, mainly, its microbial load, but also its pH, degree of turbidity and polyphenol concentration.

In the method according to the invention, the fermentation involves the use of selected yeast strains in quantities variable preferably between 5 and 100 g/hl, even more preferably between 20 and 40 g/hl based on the volume of the grape must, and fermentation starter cultures to allow the chosen strain to colonize the medium thus inhibiting the proliferation of contaminant species and achieving the rapid utilization of all the dissolved O₂ that may be present. The activity of the selected yeast must, of course, operate the conversion and transformation of the sugars of the must in alcohol and other secondary compounds.

The yeast strains suitable according to the present invention are those traditionally used in the production of wine and well-known to the skilled person in the field, provided they are low sulfite producers.

A yeast strain suitable for use according to the invention is for instance commercialized under the name of "Selezione Italica 337" (Oliver Ogar).

Advantageously, given that the method of the present invention does not involve a sulfiting step, no fermentation hindering effects are established by the action of sulfites, as is the case, instead, in traditional methods. As a consequence, in the method according to the invention, the fermentation is brought to completion within a substantially shorter time, and the very profile of such fermentation is improved, causing the generation of a characteristic bouquet in the final wine, which can be considered to be superior to that obtained by the traditional methods.

Moreover, given the lack of a sulfiting step, the wine obtained by the method of the invention has a concentration of sulfites comprised between 0 and 10 mg/1, preferably between 4 and 8 mg/1.

According to a preferred embodiment, the method of the invention involves a further lysozyme addition in the above-mentioned clarified grape must fermentation step, preferably following a suitable culture inoculation for such fermentation. Preferably, the lysozyme is added during and/or at completion of the fermentation step at a rate comprised between 5 and 50 g/hl based on the final volume, to ensure protection against the occurrence of bacterial contamination.

According to another aspect of the present invention, the method of the invention involves a further addition of tannins to the wine obtained following the completion of the fermentation step at a rate comprised between 1 and 50 g/hl based on the volume of said wine.

According to yet another aspect of the present invention, the method of the invention involves a micro-oxygenation step of the wine obtained following the fermentation step. This step is particularly suited in case of red wine production.

According to a further aspect of the present invention, the method involves the inoculation of the wine obtained following the fermentation step with malolactic bacteria in order to obtain the malolactic fermentation and then the addition of 5 to 50 g/hl based on the wine obtained of lysozyme to stop the bacterial activity.

### Detailed description of the invention

The embodiments hereunder illustrate the method for the production of a wine that is free of added sulfites according to the invention, and a wine obtained from such a method.

### Example 1 - White wine

The test involved the grape harvest of 2005. Inzolia cultivar grapes, from the province of Trapani (Italy) were used.

The must obtained from 450 quintals of grapes from grape crushing was cold clarified for 24 hours by traditional methods and exhibited low acidity, high pH and a medium microbial load (Table 1).

**Table 1. Composition of the must at crushing**

| Parameters | Values obtained |
|---|---|
| Reducing sugars (g/l) | 195 |
| Total acidity (Tartaric acid) (g/l) | 3.01 |
| pH | 3.71 |
| Malic acid (g/l) | 1.81 |
| Microbial load (CFU/ml) | 6 x 10³ |

The clarified must was thus racked and divided in a first and a second batch of 80 hl each. The acidity of the must was adjusted in both batches with tartaric acid.

The first batch of clarified must was treated in a suitable reactor by the method of the invention while the second batch (or reference batch) was treated in another reactor, for comparison, according to a conventional method involving the addition of sulfur dioxide.

More in detail, according to the invention, 15 g/hl based on the volume of the grape must of Excellence Gold White tannin (Oliver-Ogar) were added to the first batch to prevent it from oxidation.

Separately, a solution of granular type lysozyme for winemaking was prepared in situ by dissolving 1200 g of the commercial product Lysozyme food grade with activity > 95% from Fordras SA in 12 1 of water. The thus prepared solution was brought to 60 1 with must and then it was added to the reactor containing the first batch, after a holding time of 5 hours from the time of addition of the tannin, in a quantity such as to obtain a lysozyme concentration in the must of 25 g/hl. The addition of lysozyme to the first batch was completed within about one hour.

To both clarified must batches were added 15 g/hl of yeast and 20 g/hl of fermentation starter culture for the second batch (reference batch) and double the amount for the first batch. According to the conventional method, 3.5 g/hl of SO₂ were added to the second batch. The fermentation was left to proceed in both batches for 14 days at 18°C at atmospheric pressure.

Such starter culture inoculum in the batch treated according to the invention enabled the fermentation to rapidly start. A higher rate of sugar use up and completion of the fermentation (reducing sugars < 1g/l) 36 hours faster than the reference batch were also observed.

At the end of the alcoholic fermentation, the wine obtained according to the invention had maintained the original quantity of malic acid more or less unaltered (please see Table 2 below) just like the wine obtained from the traditional method which was being compared, thus confirming the efficacy of the lysozyme in the control of the malolactic flora.

As far as the sulfur dioxide content is concerned, it is notably less in the wine of the invention and is originated exclusively by the metabolism of the yeasts, given that no addition of sulfur dioxide is involved in the method of production in this case.

**Table 2. Composition at the end of the alcoholic fermentation**

| Parameters | Wine of the invention | Traditional wine |
|---|---|---|
| Malic acid (g/l) | 1.29 | 1.25 |
| Lactic acid (g/l) | 0.03 | 0.05 |
| Total SO₂ (mg/l) | 8 | 99 |
| Free SO₂ (mg/l) | - | 38 |
| Lysozyme (mg/l) | 135 | absent |

At the end of the fermentation, 5 g/hl of SO₂ were added to the reference wine and both wines were stored for 3 months in inert atmosphere (nitrogen) and then suitably stabilized and bottled. The chemical and microbiological stability of the wines under comparison was then compared. The results are shown in Table 3 below.

**Table 3. Composition parameters of the wines under comparison after 3 months of storage**

| Parameters | Units of measurement | Wine of the invention | Reference wine |
|---|---|---|---|
| O.D. (Optical density) 420 | nm | 0.096 | 0.068 |
| O.D. 420 (55°C x 48) | nm | 0.112 | 0.070 |
| pH | | 3.71 1 | 3.76 |
| Total acid (tart. ac) | g/l | 4.3 | 4.38 |
| Volatile ac. (acet. ac) | g/l | 0.15 | 0.30 |
| Malic acid (g/l) | g/l | 1.15 | 1.21 |
| Lactic acid (g/l) | g/l | 0.05 | 0.05 |
| Lactic acid bacteria | CFU/ml | 3.21x10³ | 4.56x103 |
| Acetic acid bacteria | CFU/ml | <10 | 2 x 10² |
| Total SO₂ | mg/l | 8 | 122 |
| Lysozyme | mg/l | 176 | absent |

Table 3 shows that for both wines the bacterial stability control lasted beyond the storage period without significant variations in the general acidic profile. It is worth noting that the reference wine exhibits an increase in the figure for volatile acidity, given by the increase in the level of acetic acid population in the wines. As far as the protection against oxidation is concerned, the values for optical density were similar in the wines under comparison, which shows the efficacy of the tannins in preserving the wines from oxidation, which adversely affects their aroma and color (darkening).

### Example 2 - Red wine

The test involved the grape harvest of 2006. Merlot cultivar grapes were used.

The must obtained from 450 quintals of grapes from grape crushing was brought to a temperature of 16-18°C and was then cold clarified for 24 hours by traditional methods.

The must was then transferred to a suitable reactor and a Proantocyanidinic tannin, Excellence Vintage (by Oliver-Ogar) was then added at the bottom of the must reactor at a rate of 30 g/hl of must to prevent it from oxidation.

Separately, 25 g/hl (based on the volume of the must) of "Selezione Italica 337" yeast (Oliver-Ogar) inoculum was rehydrated in water in a 1/10 weight ratio. The obtained yeast inoculum is then added to the first 10% of the must.

Separately, a solution of granular type lysozyme for winemaking was prepared in situ by dissolving 1200 g of the commercial product Lysozyme food grade with activity > 95% from Fordras SA in 12 1 of water. The thus prepared solution was brought to 60 1 with must and then it was added to the reactor containing the must, after a holding time of 24 hours from the time of addition of the tannin, in a quantity such as to obtain a lysozyme concentration in the must of 30 g/hl. The addition of lysozyme was carried out concomitantly with a conventional *delestage* protocol.

The fermentation was then started and left to proceed for 14 days at 16°C at atmospheric pressure.

At the end of the fermentation step, 20 g/hl of lysozyme was again added to the wine obtained, followed by extended maceration and the addition of 5 g/hl (based on the volume of the wine obtained) of Proantocyanidinic tannin, Excellence Vintage (Oliver-Ogar), and of 5 g/hl (based on the volume of the wine obtained) of Quebracho tannin, Excellence Brown (Oliver-Ogar).

Micro-oxygenation was then carried out on the wine obtained, at a rate of 10 ml/l/month for 15 days.

This was followed by the inoculation with 1 g/hl based on the volume of the wine obtained of malolactic bacteria upon which the concentration of malic acid was monitored until a drop in concentration to 0.2 g/l was obtained. 40 g/hl (based on the volume of the wine) of lysozyme was then added to stop the bacterial activity and finally, one week after the addition of lysozyme, 30 g/hl of Excellence Brown (Oliver-Ogar) tannin was added to the wine.

The final concentration values of malic, lactic, acetic and total acid, sugar, SO₂, and alcohol by volume, lysozyme and pH in the wine obtained are summarized in Table 4.

**Table 4. Composition parameters of the wine obtained**

| Parameter | Unit of measurement | Value |
|---|---|---|
| Total acidity | g/l | 5.90 |
| Acetic acid | g/l | 0.253 |
| Lactic acid | g/l | 1.53 |
| Malic acid | g/l | 0.061 |
| Total SO₂ | mg/l | 1.28 |
| Free SO₂ | mg/l | 0.64 |
| Alcohol by volume | % vol | 11.56 |
| Total sugars | g/l | 2.64 |
| Lysozyme | mg/l | absent |
| pH | | 3.56 |

In conclusion, the winemaking method according to the invention has been shown to be suitable for the obtention of wines free of added SO₂. The inoculum of the selected yeasts enabled a rapid and complete course of fermentation. The control of the lactic acid flora was ensured during both the fermentation steps and the storage and could be further enhanced by the optional subsequent addition of lysozyme at the end of the fermentation.

Moreover, the wines obtained by the methods of the present invention have a vivid color and have an appearance that is comparable to that obtained from traditional production methods that involve a sulfiting step.

Moreover, the wines possess a pleasant bouquet and a flavor that is satisfactory and typical of the type of grape from which they are obtained.

It is thus clear from the description and from the examples given above that the winemaking method of the present invention (and the wines thus obtained) offers considerable advantages over the prior art. In fact, thanks to the method of the present invention, the addition of sulfites in the winemaking production method is no longer required.

Tannins and lysozyme, added separately according to the present invention, carry out an activity having an advantageously complementary effect once they are both added in the grape must. Their combined actions, in fact, can entirely replace the traditional addition of sulfites, thus guaranteeing microbial stability and the organoleptic characteristics of the wine so that it is no longer necessary to resort to a sulfiting step.

This is advantageous in that the resulting product does not exhibit the drawbacks deriving from the addition of sulfites, such as the manifestation of their toxicity and of their intolerance.

Moreover, the product obtained will be able to be advertised as being "organic" and flaunt a production method that is essentially biological and natural.

## Claims

1. Method for the production of wine comprising the steps of:
a) preparing a grape must;
b) subjecting said grape must to clarification; and
c) subjecting said clarified grape must to alcoholic fermentation to obtain said wine;
**characterized in that** it comprises the step of adding to said clarified grape must, in sequence 1) at least one tannin and 2) a lysozyme.

2. Method according to claim 1 wherein said tannin is added to said must at a concentration of 5 to 100 g/hl based on the volume of the final wine.

3. Method according to claim 1 or 2 wherein said tannin is added to said must in the form of an aqueous solution containing from 3 to 50% in weight of said at least one tannin.

4. Method according to claim 3 wherein said aqueous solution is added in a quantity comprised between 10 and 200 ml/hl based on the volume of the final wine.

5. Method according to any one of the previous claims wherein said aqueous solution is added in a quantity comprised between 10 and 30 ml/hl based on the volume of the final wine.

6. Method according to any one of the previous claims wherein said lysozyme is added in the form of an aqueous solution.

7. Method according to any one of the previous claims wherein said lysozyme is added in a quantity comprised between 5 and 50 g/hl based on the volume of the final wine.

8. Method according to any one of the previous claims wherein said lysozyme is added in a quantity comprised between 15 and 35 g/hl based on the volume of the final wine.

9. Method according to any one of the previous claims wherein said lysozyme is added in a quantity comprised between 20 and 30 g/hl based on the volume of the final wine.

10. Method according to any one of the previous claims wherein said alcoholic fermentation comprises the use of selected yeast strains in quantities variable between 5 and 100 g/hl based on the volume of the grape must, and fermentation starter cultures.

11. Method according to claim 10 wherein said selected yeast strains are used in a quantity comprised between 20 and 40 g/hl based on the volume of the grape must.

12. Method according to claim 10 or 11 wherein said selected yeast strains are low sulfite producers.

13. Method according to any of the previous claims wherein the method comprises at least one further step of lysozyme addition at said fermentation step at a rate comprised between 5 and 50 g/hl based on the volume of the clarified grape must.

14. Method according to any of the previous claims wherein the method comprises at least one further step of tannin addition to the wine obtained in step c) at a rate comprised between 1 and 50 g/hl based on the volume of said wine.

15. Method according to any of the previous claims wherein the method further comprises a micro-oxygenation step of the wine obtained in step c).

16. Method according to any of the previous claims wherein the method further comprises the step of inoculation of said wine obtained in step c) with malolactic bacteria, followed by the step of addition of 5 to 50 g/hl based on said wine of lysozyme to stop the bacterial activity.

17. A wine having a concentration of sulfite comprised between 0 and 10 mg/l, which is obtained by the method of any one of claims 1 to 16

18. A wine having a concentration of sulfite comprised between 4 and 8 mg/l, which is obtained by the method of any one of claims 1 to 16.

## Patentansprüche

1. Verfahren zur Herstellung von Wein, die Schritte umfassend:
a) Herstellen eines Traubenmosts;
b) Klären des Traubenmosts; und
c) Unterziehen des geklärten Traubenmosts einer alkoholischen Fermentation, um den Wein zu erhalten;
**dadurch gekennzeichnet, dass** es den Schritt umfasst, dem geklärten Traubenmost der Reihe nach 1) mindestens ein Tannin und 2) ein Lysozym zuzusetzen.

2. Verfahren nach Anspruch 1, wobei das Tannin dem Most bei einer Konzentration von 5 bis 100 g/hl basierend auf dem Volumen des fertigen Weins zugesetzt wird.

3. Verfahren nach Anspruch 1 oder 2, wobei das Tannin dem Most in Form einer wässrigen Lösung zugesetzt wird, die zwischen 3 und 50 Gew.-% des mindestens einen Tannins enthält.

4. Verfahren nach Anspruch 3, wobei die wässrige Lösung in einer Menge zugesetzt wird, die 10 bis 200 ml/hl basierend auf dem Volumen des fertigen Weins beträgt.

5. Verfahren nach einem der vorhergehenden Ansprüche, wobei die wässrige Lösung in einer Menge zugesetzt wird, die 10 bis 30 ml/hl basierend auf dem Volumen des fertigen Weins beträgt.

6. Verfahren nach einem der vorhergehenden Ansprüche, wobei das Lysozym in Form einer wässrigen Lösung zugesetzt wird.

7. Verfahren nach einem der vorhergehenden Ansprüche, wobei das Lysozym in einer Menge zugesetzt wird, die 5 bis 50 g/hl basierend auf dem Volumen des fertigen Weins beträgt.

8. Verfahren nach einem der vorhergehenden Ansprüche, wobei das Lysozym in einer Menge zugesetzt wird, die 15 bis 35 g/hl basierend auf dem Volumen des fertigen Weins beträgt.

9. Verfahren nach einem der vorhergehenden Ansprüche, wobei das Lysozym in einer Menge zugesetzt wird, die 20 bis 30 g/hl basierend auf dem Volumen des fertigen Weins beträgt.

10. Verfahren nach einem der vorhergehenden Ansprüche, wobei die alkoholische Fermentation den Einsatz von ausgewählten Hefestämmen in Mengen, die zwischen 5 und 100 g/hl basierend auf dem Volumen des Traubenmosts veränderbar sind, und von Fermentationsstarterkulturen umfasst.

11. Verfahren nach Anspruch 10, wobei die ausgewählten Hefestämme in einer Menge zwischen 20 und 40 g/hl basierend auf dem Volumen des Traubenmosts verwendet werden.

12. Verfahren nach Anspruch 10 oder 11, wobei die ausgewählten Hefestämme wenig Sulfit produzieren.

13. Verfahren nach einem der vorhergehenden Ansprüche, wobei das Verfahren mindestens einen weiteren Schritt der Zugabe von Lysozym bei dem Fermentationsschritt umfasst, und zwar in einer Menge, die 5 bis 50 g/hl basierend auf dem Volumen des geklärten Traubenmosts beträgt.

14. Verfahren nach einem der vorhergehenden Ansprüche, wobei das Verfahren mindestens einen weiteren Schritt der Zugabe von Tannin zu dem in Schritt c) erhaltenen Wein umfasst, und zwar in einer Menge, die 1 bis 50 g/hl basierend auf dem Volumen des Weins beträgt.

15. Verfahren nach einem der vorhergehenden Ansprüche, wobei das Verfahren darüber hinaus einen Schritt der Mikro-Oxygenierung des in Schritt c) erhaltenen Weines umfasst.

16. Verfahren nach einem der vorhergehenden Ansprüche, wobei das Verfahren darüber hinaus den Schritt der Inokulation des in Schritt c) erhaltenen Weines mit malolaktischen Bakterien umfasst, gefolgt von dem Schritt der Zugabe von 5 bis 50 g/hl Lysozym basierend auf dem Wein, um die bakterielle Aktivität zu stoppen.

17. Wein mit einer Konzentration von Sulfit, die zwischen 0 und 10 mg/l liegt, der durch das Verfahren nach einem der Ansprüche 1 bis 16 erhalten wird.

18. Wein mit einer Konzentration von Sulfit, die zwischen 4 und 8 mg/l liegt, der durch das Verfahren nach einem der Ansprüche 1 bis 16 erhalten wird.

## Revendications

1. Procédé de production de vin comprenant les étapes consistant à:
a) préparer du moût de raisin ;
b) soumettre ledit moût de raisin à une clarification ; et
c) soumettre ledit moût de raisin clarifié à une fermentation alcoolique pour obtenir ledit vin ;
**caractérisé en ce qu'**il comprend l'étape consistant à ajouter audit moût de raisin clarifié, dans l'ordre 1) au moins un tanin et 2) un lysozyme.

2. Procédé selon la revendication 1, dans lequel ledit tanin est ajouté audit moût à une concentration de 5 à 100 g/hl sur la base du volume du vin final.

3. Procédé selon la revendication 1 ou 2, dans lequel ledit tanin est ajouté audit moût sous la forme d'une solution aqueuse contenant de 3 à 50 % en poids dudit au moins un tanin.

4. Procédé selon la revendication 3, dans lequel ladite solution aqueuse est ajoutée en une quantité comprise entre 10 et 200 ml/hl sur la base du volume du vin final.

5. Procédé selon l'une quelconque des revendications précédentes, dans lequel ladite solution aqueuse est ajoutée en une quantité comprise entre 10 et 30 ml/hl sur la base du volume du vin final.

6. Procédé selon l'une quelconque des revendications précédentes, dans lequel ledit lysozyme est ajouté sous la forme d'une solution aqueuse.

7. Procédé selon l'une quelconque des revendications précédentes, dans lequel ledit lysozyme est ajouté en une quantité comprise entre 5 et 50 g/hl sur la base du volume du vin final.

8. Procédé selon l'une quelconque des revendications précédentes, dans lequel ledit lysozyme est ajouté en une quantité comprise entre 15 et 35 g/hl sur la base du volume du vin final.

9. Procédé selon l'une quelconque des revendications précédentes, dans lequel ledit lysozyme est ajouté en une quantité comprise entre 20 et 30 g/hl sur la base du volume du vin final.

10. Procédé selon l'une quelconque des revendications précédentes, dans lequel ladite fermentation alcoolique comprend l'utilisation de souches de levure sélectionnées en quantités variables entre 5 et 100 g/hl sur la base du volume du moût de raisin et des cultures d'initiateur de fermentation.

11. Procédé selon la revendication 10, dans lequel lesdites souches de levure sont utilisées en une quantité comprise entre 20 et 40 g/hl sur la base du volume du moût de raisin.

12. Procédé selon la revendication 10 ou 11, dans lequel lesdites souches de levure sélectionnées produisent peu de sulfites.

13. Procédé selon l'une quelconque des revendications précédentes, dans lequel le procédé comprend au moins une étape supplémentaire d'addition de lysozyme au niveau de ladite étape de fermentation à un taux compris entre 5 et 50 g/hl sur la base du volume du moût de raisin clarifié.

14. Procédé selon l'une quelconque des revendications précédentes, dans lequel le procédé comprend au moins une étape supplémentaire d'addition de tanins au vin obtenu à l'étape c) à un taux compris entre 1 et 50 g/hl sur la base du volume dudit vin.

15. Procédé selon l'une quelconque des revendications précédentes, dans lequel le procédé comprend en outre une étape de micro-oxygénation du vin obtenu à l'étape c).

16. Procédé selon l'une quelconque des revendications précédentes, dans lequel le procédé comprend en outre une étape d'inoculation dudit vin obtenu à l'étape c) avec des bactéries malolactiques, suivie par l'étape d'addition de 5 à 50 g/hl sur la base dudit vin de lysozyme pour arrêter l'activité bactérienne.

17. Vin ayant une concentration en sulfites comprise entre 0 et 10 mg/l, qui est obtenu par le procédé de l'une quelconque des revendications 1 à 16.

18. Vin ayant une concentration en sulfites comprise entre 4 et 8 mg/l, qui est obtenu par le procédé de l'une quelconque des revendications 1 à 16.
